# EUROPÄISCHE PATENTSCHRIFT

(11) **EP 2 433 189 B1**
(45) Veröffentlichungstag und Bekanntmachung des Hinweises auf die Patenterteilung: **03.07.2013**
(21) Anmeldenummer: 09776625.7
(22) Anmeldetag: 18.05.2009
(51) Int. Cl.: G05B 19/418, G05B 23/02

(54) **VERFAHREN ZUM ANALYSIEREN VON MELDUNGSARCHIVEN UND KORRESPONDIERENDES COMPUTERPROGRAMM ZUR ABLEITUNG EINES ENDLICHEN AUTOMATEN**
METHOD FOR ANALYZING MESSAGE ARCHIVES AND CORRESPONDING COMPUTER PROGRAM TO GENERATE A FINITE STATES MACHINE
PROCÉDÉ POUR ANALYSER DES ARCHIVES DE MESSAGES ET PROGRAMME INFORMATIQUE CORRESPONDANT POUR GÉNÉRER UN AUTOMATE À ÉTATS FINIS

(43) Veröffentlichungstag der Anmeldung: 28.03.2012
(73) Patentinhaber: Siemens Aktiengesellschaft, 80333 München (DE)
(72) Erfinder: FOLMER, Jens, 85748 Garching b. München (DE); KATZKE, Uwe, 52074 Aachen (DE); PANTFÖRDER, Dorothea, 85748 Garching b. München (DE); PFEIFFER, Bernd-Markus, 76744 Wörth (DE); VOGEL-HEUSER, Birgit, 85748 Garching b. München (DE)
(86) Internationale Anmeldenummer: PCT/EP2009/003523
(87) Internationale Veröffentlichungsnummer: WO 2010/133234

(56) Entgegenhaltungen:
- WO-A-2004/114133
- WO-A-2006/000110

## Beschreibung

Die Erfindung betrifft ein Verfahren zum Analysieren einer Menge oder Folge von bei der Steuerung und/oder Überwachung eines technischen Prozesses generierten Meldungen zur Ableitung eines endlichen Automaten, wobei die vorgenannte Menge/Folge im Folgenden auch kurz als Meldungsarchiv bezeichnet wird. Zu jeder Meldung werden dabei eine deren Auftreten kodierende Zeitinformation und eine charakteristische Kennzeichnung erfasst. Die Erfindung betrifft auch ein Verfahren zum Betrieb eines Automatisierungssystems, welches Meldungen generiert oder erhält, die damit über der Zeit zu einem Meldungsarchiv anwachsen, in Bezug auf welches das Analyseverfahren, auf das sich die Erfindung bezieht, anwendbar ist oder angewendet wird.

Verfahren zum Analysieren von Folgen von Einzelmeldungen sind bekannt. Exemplarisch wird insoweit auf die WO 2006/000110 A1 verwiesen. Der dort beschriebene Ansatz zielt auf die Unterdrückung redundanter Meldungen ab. Redundante Meldungen sollen dabei erkannt werden, indem untersucht wird, ob eine betrachtete Meldung auf Randbedingungen zurückgeht, die bereits als ursächlich für bekannte Meldungen feststehen.

Aus der WO 2004/114133 A1 ist ein Verfahren zur Diagnose einer prozesstechnischen Anlage bekannt, bei welchem die Ursache von Alarmen oder Ereignissen, die in der Anlage erzeugt werden, analysiert wird. Dabei wird eine Alarm- oder Ereignismeldung mit einem oder mehreren Mustern zuvor erzeugter oder abgespeicherter Alarm- oder Ereignismeldungen verglichen. Weiterhin wird die wahrscheinliche Ursache von Alarmmeldungen identifiziert, die in einer Liste von Meldungen, die in einem vorgegebenen Zeitfenster durch die Anlage generiert wurden, enthalten sind. Das Ergebnis der Ursachenanalyse wird auf einer Anzeige an eine Bediener ausgegeben. Beim Ansatz gemäß der Erfindung steht im Vordergrund, eine Anzahl automatisch generierter Meldungen zu reduzieren oder zu strukturieren. Meldungen aus technischen Prozessen und/oder aus zu deren Steuerung und/oder Überwachung vorgesehenen Automatisierungssystemen, insbesondere Systemen zur Automatisierung industrieller Prozesse (Industrieautomatisierungssysteme), mit denen sich die Erfindung im Grundsatz befasst, sind für menschliches Bedienpersonal (Bediener) vorgesehen, um Zustände des Prozesses oder des Automatisierungssystems anzuzeigen, die eine unmittelbare Reaktion des Bedieners erfordern, weil sie z. B. auf eventuelle Fehler oder Ausnahmesituationen hinweisen.

Häufig hat sich dabei allerdings gezeigt, dass bestimmte Situationen eine wahre Flut von Meldungen - in der Fachliteratur als Meldungsflut und teilweise auch als "Alarmschauer" bezeichnet - auslösen, so dass die eigentlich angestrebte Information des Bedieners dadurch erschwert ist, dass der Bediener aufgrund der Anzahl gleichzeitig oder in engem zeitlichen Zusammenhang auftretender Meldungen überfordert ist. Ein Erkennen "wichtiger" Meldungen ist bei einer solchen Situation für den Bediener häufig nicht mehr möglich, so dass z. B. bei einer durch einzelne Meldungen an sich angezeigten Ausnahmesituation in der Praxis kein rechtzeitiger Eingriff erfolgt und es danach z. B. zu Produktionsausfällen kommt.

Die Erfindung schlägt nun vor, wie Meldungsarchive, also eine Menge von bereits aufgelaufenen Meldungen, analysiert werden können, um auf Basis des Analyseergebnisses einem Programmierer Hilfestellung zu gegeben zur Ableitung eines endlichen Automaten. Der Programmierer erstellt nämlich für das zur Steuerung und/oder Überwachung des technischen Prozesses vorgesehene Automatisierungssystem eine Automatisierungslösung und die Hilfestellung soll Hinweise geben, wie z. B. ein Alarmmanagement und die bei auftretenden Alarmen abzugebenden Meldungen zu projektieren sind, so dass im Ergebnis eine strukturierte Generierung von Meldungen mit insgesamt reduzierter Meldungsanzahl erreichbar ist. Als Ergebnis einer solchen Optimierung soll sich ergeben, dass für den jeweiligen Bediener die erzeugten Meldungen besser verständlich und/oder leichter zu überblicken sind.

Diese Aufgabe wird mit einem Verfahren mit den Merkmalen des Anspruchs 1 gelöst. Dazu ist bei einem Verfahren zum Analysieren einer Menge von bei der Steuerung und/oder Überwachung eines technischen Prozesses, insbesondere eines industriellen technischen, Prozesses, generierten Meldungen, zu denen jeweils eine deren Auftreten kodierende Zeitinformation und eine charakteristische Kennzeichnung erfasst werden, vorgesehen, dass in einer nach der Zeitinformation sortierten Abfolge von Kennzeichnungen nach Mustern gesucht wird und dass erkannte Muster durch eine das Muster charakterisierende Kennzeichnung ersetzt werden.

Die Erfindung betrachtet also zeitlich zurückliegende Meldungen und als Muster kann z. B. nach gleichartigen, jeweils aufeinander folgenden Meldungen gesucht werden. Meldungen wie "Temperaturüberschreitung Silo 3 - 37°" und "Temperaturüberschreitung Silo 3 - 39°" sind keine identischen Meldungen aber Beispiele für gleichartige Meldungen. Wenn jeder derartigen Temperaturüberschreitungsmeldung als weitere Meldung ein Alarm nachfolgt, ergibt sich jeweils ein durch das Verfahren erkennbares Muster.

Die Meldungen beziehen sich jeweils auf ein bestimmtes Ereignis an einem Aggregat oder Anlagenteil. Solche Meldungen lassen sich durch eine charakteristische Kennzeichnung beschreiben; die Kennzeichnung repräsentiert also die zugrunde liegende Meldung. Die Art der Ableitung einer charakteristischen Kennzeichnung bleibt der jeweiligen Implementierung vorbehalten. Für die Erfindung ist relevant, dass jede Meldung durch eine charakteristische Kennzeichnung repräsentiert ist, und das Suchen nach Meldungspaaren oder Meldungsgruppen wird dadurch erleichtert, dass sich die Suche auf anhand der zugrunde liegenden Meldungen generierte Kennzeichnungen bezieht. Es muss also in einer Folge von Meldungen nicht jede einzelne Meldung analysiert werden, sondern es wird statt dessen eine Folge von Kennzeichnungen analysiert. Jede Kennzeichnung kann dabei als Symbol und die Folge von Kennzeichnungen als Symbolfolge aufgefasst werden.

Die Begriffe Symbol, Kennzeichnung und Meldung werden im Folgenden, wo sich nicht aus dem Kontext etwas anderes ergibt, synonym benutzt. Gleiches gilt für die Begriffe Symbolfolge, Folge von Kennzeichnungen und Meldungsarchiv. Weil eine Kennzeichnung charakteristisch für die zugrunde liegende Meldung ist, ist es vor diesem Hintergrund auch gerechtfertigt, den Ansatz gemäß der Erfindung als Suche nach Mustern in einer Folge von Meldungen mit nachfolgender Reduktion der als Muster erkannten Meldungen aufzufassen.

Das Meldungsarchiv kann als nur die Kennzeichnungen oder nur die Meldungen (ggf. mit den jeweiligen Kennzeichnungen) umfassende Datenbasis vorliegen oder sich zur Laufzeit aus den Meldungen ergeben und ist damit eine tatsächliche oder zumindest gedankliche Zusammenfassung sämtlicher Meldungen oder sämtlicher dazu generierter Kennzeichnungen. Die zu untersuchende Symbolfolge kann also von dem Meldungsarchiv umfasst sein oder sich aus dem Meldungsarchiv ergeben.

Indem erkannte Muster in der Symbolfolge durch eine das Muster charakterisierende Kennzeichnung ersetzt werden, werden die Symbolfolge und - zumindest mittelbar - das zugrunde liegende Meldungsarchiv reduziert, z. B. in Form einer zumindest temporären Kopie des Meldungsarchivs, die entsprechend der resultierenden, reduzierten Symbolfolge reduziert wird und in dieser Form zur Anzeige oder dergleichen gebracht wird. Bei der Mustersuche in der Symbolfolge werden Gruppen von Symbolen, insbesondere Paare von Symbolen, betrachtet. Bevorzugt werden dabei aufeinander folgende Symbole/Kennzeichnungen, also Gruppen oder Paare von Symbolen/Kennzeichnungen, mit dem höchsten Vorkommen durch eine reguläre Grammatik reduziert. Dies geschieht iterativ solange, bis alle vorkommenden Gruppen/Paarungen nur noch ein Mal in der Symbolfolge enthalten sind.

Die Analyse bezieht sich also - anders als z. B. die WO 2006/000110 A1 - nicht auf Prozess- oder sonstige Zustände als mutmaßliche Ursachen für einzelne Meldungen, sondern auf die Meldungen selbst und hier auf eine Menge von Meldungen, z. B. ein Meldungsarchiv, in dem hunderte oder tausende von Meldungen, wie sie bei der Überwachung eines bestimmten technischen Prozesses tatsächlich bereits aufgetreten sind, zusammengefasst sind oder sein können.

Die Erfindung bezieht sich auch auf ein Verfahren zum Betrieb eines Automatisierungsgeräts - insbesondere eines Industrieautomatisierungsgeräts nach Art eines so genannten Prozessrechners, einer speicherprogrammierbaren Steuerung oder dergleichen -, welches das oben vorgestellte und nachfolgend mit weiteren Details beschriebene Analyseverfahren ausführt. Ein solches Automatisierungsgerät kann dauerhaft oder temporär Bestandteil eines Automatisierungssystems zur Steuerung und/oder Überwachung eines konkreten technischen Prozesses sein. Während das oben erwähnte Analyseverfahren vom technischen Prozess und/oder vom zugehörigen Automatisierungssystem entkoppelt ausgeführt werden kann, ist mit einem Automatisierungsgerät, das als Bestandteil eines Automatisierungssystems das Analyseverfahren ausführt, eine Analyse möglich, die zwar retrospektiv erfolgt, aber online durchgeführt und damit in den kontinuierlichen Betrieb des Prozesses und des Automatisierungssystems eingebunden werden kann. Das Automatisierungsgerät erhält dazu oder generiert unter Umständen auch selbst die zu analysierenden Meldungen und zu jeder Meldung werden eine deren Auftreten kodierende Zeitinformation und eine charakteristische Kennzeichnung erfasst, so dass nach dem bereits beschriebenen Analyseverfahren durch das Automatisierungsgerät oder im Rahmen des Verfahrens zu dessen Betrieb in einer nach der Zeitinformation sortierten Abfolge von Kennzeichnungen nach Mustern gesucht wird oder gesucht werden kann und erkannte Muster durch eine das Muster charakterisierende Kennzeichnung ersetzt werden oder ersetzbar sind.

Der Vorteil der Erfindung besteht darin, dass durch die Erkennung von Mustern die Menge der von einem Meldungsarchiv umfassten Meldungen strukturierbar ist, so dass aus erkannten Strukturen Erkenntnisse ableitbar sind, die in eine Meldungs - und Alarmprojektierung einfließen können. Im Ergebnis kann dann die Automatisierungslösung - also entweder das Automatisierungssystem mit davon umfassten Automatisierungsgeräten als Hardware zur Steuerung und/oder Überwachung des technischen Prozesses oder ein oder mehrere durch das oder die Automatisierungsgeräte ausgeführte Steuerungsprogramme als Software - so ausgelegt werden, dass insgesamt weniger Meldungen oder zusammengehörige Meldungen als solche generiert werden. Die Erfindung unterstützt also im Wesentlichen einen Programmierer oder Projektierer der Automatisierungslösung beim Auffinden oder beim Verbessern einer in Bezug auf das Meldungsaufkommen günstigen Projektierung der jeweiligen Automatisierungslösung.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn das Automatisierungsgerät die Meldungen selbst generiert und/oder aus dem technischen Prozess oder von anderen in die Steuerung oder Überwachung des Prozesses involvierten Automatisierungsgeräten erhält, fungiert das Automatisierungsgerät, das das Analyseverfahren durchführt, quasi als Sammelstelle für die insgesamt auftretenden Meldungen. Ein solches Automatisierungsgerät kann z. B. neben der Analyse auch andere Aufgaben übernehmen, z. B. eine Protokollierung auftretender Meldungen, so dass sich bei einer derartigen Konstellation besonders bevorzugt ergibt, dass das Ergebnis einer solchen kontinuierlichen Protokollierung als Meldungsarchiv, auf das sich das Analyseverfahren bezieht, unmittelbar verwendbar ist.

Nachdem zu den Meldungen jeweils eine charakteristische Kennzeichnung generiert oder erfasst wird, z. B. eine numerische, alphanumerische oder gemischte Kennzeichnung, die die Meldung nach ihrer Art und/oder ihrem Inhalt kodiert, z. B. "F" für Fehlermeldungen, "A" für Alarme, usw., erfolgt die Mustersuche in der hier und im Folgenden als Symbolfolge bezeichneten zeitlich sortierten Abfolge solcher Kennzeichnungen (Symbole). Zur Mustersuche werden dabei Verfahren der syntaktischen Mustererkennung angewandt. Eine charakteristische Kennzeichnung ist für gleiche oder gleichartige auftretende Meldungen stets gleichbleibend (z. B. "A" für Alarme) oder zumindest hinsichtlich eines kennzeichnenden Teils gleichbleibend (z. B. "A1", "A19", "A21", usw. für verschiedene Alarme mit dem alphanumerischen Teil als gleichbleibendem kennzeichnenden Teil). Bei zu verschiedenen Zeitpunkten auftretenden, gleichen oder ähnlichen Meldungen ergeben sich in der Symbolfolge wiederkehrende Symbole/Kennzeichnungen, so dass in Bezug auf solche Regelmäßigkeiten eine auf syntaktischer Basis durchgeführte Mustererkennung möglich ist.

Aufeinander folgende Symbole, also z. B. eine Gruppe aufeinander folgender Symbole ("FFA") oder paarweise aufeinander folgende Symbole ("FA"), werden durch ein das erkannte Muster charakterisierendes Symbol ersetzt. Die Symbolfolge wird also abgekürzt und das Abkürzen erfolgt bevorzugt aufgrund einer oder mehrerer Regeln der so genannten regulären Grammatik. Es werden also innerhalb der Symbolfolge wiederkehrende, gleiche Gruppen oder Paarungen (Muster) gesucht und durch eine eindeutige Regel der regulären Grammatik abgekürzt. Eine zum Zeitpunkt der Anmeldung der vorliegenden Erfindung verwendete Definition des Fachbegriffs "reguläre Grammatik" lautet: "In der theoretischen Informatik werden formale Grammatiken vom Typ 3 der Chomsky-Hierarchie auch reguläre Grammatiken genannt. Die von diesen Grammatiken erzeugbaren Sprachen heißen dementsprechend reguläre Sprachen."

In einem ersten Schritt oder Verfahrensabschnitt der Mustersuche besteht die Analyse darin, nur Gruppen/Paare von auf Einzelmeldungen zurückgehenden Symbolen zu suchen. In der nächsten Iteration werden auch durch bereits erfolgte Abkürzungen in die Symbolfolge eingeführte Symbole in die Analyse zum Finden von weiteren wiederkehrenden Gruppen/Paaren einbezogen, indem sie wie ein auf eine Einzelmeldung zurückgehendes Symbol behandelt werden, usw..

Unabhängig von der Art der Suche nach Mustern in der Symbolfolge kann es sinnvoll sein, den Umfang der Symbolfolge zu reduzieren, was vorteilhaft erfolgt, indem in der Symbolfolge solche Symbole ausgeblendet werden, die zu Meldungen gehören, die vorgegebenen oder vorgebbaren Kriterien genügen. Die zu durchsuchende Menge an Meldungen kann sich auf diese Weise auch als Teilmenge aller vom Prozess generierten Meldungen ergeben, z. B. nur kommende Meldungen, oder nur Prozessalarme, usw.. Eine bevorzugte Variante oder Alternative besteht auch darin, dass sich das Kriterium oder die Kriterien auf eine Zugehörigkeit einer Meldung zu einem Anlagenteil des technischen Prozesses und/oder eines Teils eines zur Steuerung oder Überwachung des Prozesses vorgesehenen Automatisierungssystems bezieht oder beziehen. Auf diese Weise kann die Symbolfolge vor der Mustersuche quasi gefiltert werden, mit dem Ergebnis, dass die Symbolfolge nur noch Kennzeichnungen zu Meldungen umfasst, die einem vorgegebenen Kriterium entsprechen, also etwa der Zugehörigkeit einer Meldung zu einem bestimmten Anlagenteil des technischen Prozesses. Auf diese Weise kann eine komplexe Gesamtanlage, wie sie sich häufig bei der Steuerung oder Überwachung von industriellen technischen Prozessen, speziell industriellen Produktionsprozessen, ergibt, in kleinere Einheiten aufgeteilt werden. Diese Aufteilung reduziert die Menge der betrachteten Daten und wirkt im Weiteren einer kombinatorischen Explosion bei der Mustersuche entgegen.

Eine dem Inhalt eines Meldungsarchivs entsprechende Symbolfolge kann also in Abhängigkeit von bestimmten Kriterien in Teilsequenzen zerlegt werden und jede Teilsequenz stellt eine eigene Symbolfolge dar, auf die sich die Mustersuche gemäß dem Ansatz entsprechend der Erfindung bezieht. Das oder jedes zur Zerlegung angesetzte Kriterium stellt gleichsam einen Filter für eine ursprüngliche Symbolfolge dar und liefert eine dem jeweiligen Filter genügende, reduzierte Symbolfolge. Zur Festlegung des Filters, also des oder jedes jeweils zugrunde liegenden Kriteriums, ist im Allgemeinen Fachwissen über die jeweilige Anlage erforderlich. Als Kriterien kommen z. B. eine Menge der Alarmdaten, eine Überschreitung eines Zeitintervalls, usw. in Betracht. Alternativ oder zusätzlich kommen als Kriterien auch Aspekte wie die Meldungsart (Alarm, Fehler, etc.) oder der Ursprung der Meldung (Anlage, Anlagenteil, Aggregate, usw.) in Betracht. Jede derartige Teilsequenz kann als Symbolfolge aufgefasst und durch die Mustersuche und das Ersetzen erkannter Muster reduziert werden.

Ein intelligenter Filter kann zudem zur Erkennung von Periodizitäten und zur Bildung einer darauf abstellenden Teilsequenz (Meldungsfenster) verwendet werden. Eine Teilsequenz wird erkannt, sobald der zeitliche Abstand benachbarter Symbole/Meldungen (Muster) eine vom Benutzer eingegebene Zeitschranke überschreitet. Diese signalisiert das Ende der Teilsequenz und den Beginn einer neuen Teilsequenz. Jede Teilsequenz kann als Symbolfolge aufgefasst und - wie vorstehend beschrieben - wie diese behandelt werden.

Aus der theoretischen Informatik ist bekannt, dass eine reguläre Grammatik durch einen endlichen Automaten dargestellt werden kann und zwar durch Transformation der jeweiligen Abbildungsregeln in Überführungsfunktionen. Dadurch werden mit den sich ergebenden Pfaden im endlichen Automaten strukturelle Zusammenhänge zwischen den Meldungen graphisch dargestellt oder darstellbar. Eine bevorzugte Ausführungsform der Erfindung besteht entsprechend darin, dass aus der zur Abkürzung verwendeten regulären Grammatik ein korrespondierender endlicher Automat abgeleitet wird.

Alternativ oder zusätzlich zur syntaktischen Mustererkennung, einer Filterung, regulären Grammatik usw., kann auch eine statistische Analyse der Meldungen erfolgen, so dass eine weiter bevorzugte Ausführungsform der Erfindung vorsieht, dass erkannte Muster, die mit einer einem vorgegebenen oder vorgebbaren Schwellwert überschreitenden Häufigkeit auftreten, in einer Trefferliste dargestellt werden.

Das beschriebene Verfahren mit seinen Ausgestaltungen ist bevorzugt in Software implementiert. Entsprechend betrifft die Erfindung auch ein Computerprogramm mit durch einen Computer ausführbaren Programmcodeanweisungen zur Implementierung des Verfahrens wie hier und nachfolgend beschrieben, wenn das Computerprogramm auf einem Computer, also z. B. einem Automatisierungsgerät mit einer Verarbeitungseinheit nach Art eines Prozessors oder dergleichen, ausgeführt wird. Ein Automatisierungsgerät, insbesondere ein Industrieautomatisierungsgerät, auf dem ein derartiges Computerprogramm geladen ist, ist ein Beispiel für ein Computersystem, auf welches sich die Erfindung ebenfalls bezieht. Anstelle des Automatisierungsgeräts kommen auch Standardcomputer, wie sie heute bei der Büroautomatisierung üblich sind, in Betracht. Das Computerprogramm zur Implementierung des Verfahrens wird üblicherweise auf oder in einem Speichermedium, also z.B. auf einem magnetischen oder optischen Datenträger oder in einem Halbleiterspeicher, also z. B. flüchtigen oder nicht flüchtigen Speicherbausteinen, vorgehalten, so dass die Erfindung insoweit auch ein Speichermedium mit einem durch einen Computer ausführbaren Computerprogramm zur Implementierung des Verfahrens betrifft.

Das Verfahren und dessen Ausgestaltungen basieren auf aus der theoretischen Informatik bekannten regulären Grammatiken (reguläre Sprachen) sowie endlichen Automaten. Grundsätzlich werden zeitlich paar- oder gruppenweise aufeinander folgende Einzelmeldungen (Meldungssequenzen) durch eine Regel der regulären Grammatik abgekürzt. Anstelle der Betrachtung der Einzelmeldungen kommt - wie beschrieben - auch eine Betrachtung von zu den Einzelmeldungen generierten Kennzeichnungen/Symbolen in Betracht. Durch sukzessives Abkürzen durch solche Regeln werden Meldungssequenzen beliebiger Menge erstellt, wobei sich die Regeln während des Ablaufs des Verfahrens anhand der jeweils erkannten Muster (für jedes Muster eine Regel) ergeben. Durch mit einzelnen Meldungen verknüpfte Eigenschaften, die z. B. eine Quelle der Meldung kodieren, oder aufgrund von Sequenzen aufeinander folgender Einzelmel.dungen usw., ist es möglich, kombinatorische Abhängigkeiten zu erkennen und auf diese Weise so genannte Alarmschauer strukturell zu analysieren. Zusätzlich ist es möglich, bestimmte Kriterien an die Regeln zu binden. Dabei kann angegeben werden, dass lediglich bestimmte Meldungstypen, Meldungen bestimmter Anlagenteile, kommende oder gehende Meldungen, usw., betrachtet werden, so dass lediglich eine selektierte Teilmenge der Gesamtdaten betrachtet wird.

Das Abkürzen einer Symbolfolge kann dem Eliminieren von Störungen zwischen anderen Symbolen dienen. Diese anderen Symbole können z. B. "eigentlich relevante Meldungen" repräsentieren. Dann dient das Abkürzen dazu, die nach dem Abkürzen verbleibenden Symbole quasi hervorzuheben, während die durch das Abkürzen in die Symbolfolge eingeführten Symbole bei einer weiteren Analyse von untergeordneter Bedeutung sind. Das Abkürzen kann auch darauf abzielen, strukturelle und systematische Zusammenhänge aufgelaufener Meldungen zu erkennen. Dann sind die aufgrund des Abkürzens in die Symbolfolge eingeführten Symbole das eigentliche Analyseergebnis, während die in der Symbolfolge verbleibenden Symbole, die direkt auf eingegangene Meldungen zurückgehen, in den Hintergrund treten. Beide Varianten sind als erkannte Meldungsmuster auffassbar. Häufig wiederkehrende Meldungsmuster werden in einer Trefferliste dargestellt, um Hinweise auf besonders stark belastete Geräte oder Anlagenteile sowie auf Fehler in der Meldungsprojektierung, z. B. eines Leitsystems, zu bekommen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem,
- FIG 2: eine Darstellung zur Illustration der der Erfindung zugrunde liegenden Problematik,
- FIG 3: die Wirkzusammenhänge aus dem Szenario gemäß FIG 2 durch Abbildungsregeln wie sie einem endlichen Automaten zugrunde liegen und
- FIG 4: zeigt einen weiteren Aspekt der Erfindung am Beispiel einer größeren Menge von Meldungen.

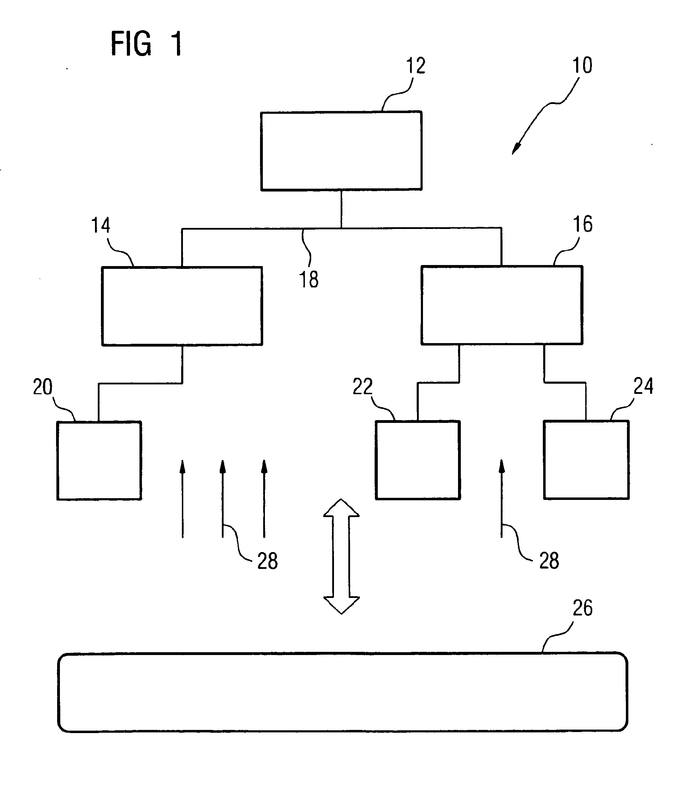

FIG 1 zeigt in schematisch vereinfachter Darstellung ein Industrieautomatisierungssystem 10 (Automatisierungssystem) mit mehreren Industrieautomatisierungsgeräten 12, 14, 16 (Automatisierungsgeräten), von denen ein übergeordnetes Automatisierungsgerät 12 z. B. als Leitsystem fungiert und die kommunikativ, z. B. über einen Bus 18, miteinander verbunden sind. Die Automatisierungsgeräte 12-16 interagieren direkt oder indirekt, z. B. über angeschlossene Feldgeräte 20, 22, 24 mit einem nicht näher dargestellten technischen Prozess 26, zu dessen Automatisierung, also zu dessen Steuerung und/oder Überwachung das Automatisierungssystem 10 vorgesehen ist. Bei dem technischen Prozess handelt es sich zum Beispiel um einen industriellen Produktionsprozess.

Die Gesamtheit aus Automatisierungssystem 10 und einem von dem Automatisierungssystem 10, also den davon umfassten Geräten 12-16, 20-24, ausgeführten Steuerungsprogramm (nicht dargestellt) wird als Automatisierungslösung bezeichnet. Nachdem sich eine solche Automatisierungslösung immer speziell auf einen konkreten technischen Prozess 26 bezieht, kann auch der technische Prozess 26 selbst als von der Automatisierungslösung mit umfasst angesehen werden.

Die Steuerung und/oder Überwachung technischer Prozesse 26 durch Automatisierungssysteme 10 wie in FIG 1 dargestellt ist an sich bekannt. Des Weiteren ist bekannt, dass bei der Steuerung oder Überwachung des technischen Prozesses 26 Meldungen 28 erzeugt werden, die in der Darstellung in FIG 1 nur schematisch vereinfacht gezeigt sind. Bei solchen Meldungen 28 kann es sich um Hinweise auf Fehler oder Ausnahmesituationen, z. B. Hinweise auf erreichte oder überschrittene Grenzwerte und dergleichen, handeln. Solche Meldungen 28 müssen jedoch nicht notwendig ihren Ursprung im technischen Prozess 26 haben, sondern können sich auch auf den Status des Automatisierungssystems 10 beziehen und als Ausnahmesituation z. B. den Ausfall oder eine sonstige Funktionsbeeinträchtigung eines der von dem Automatisierungssystem 10 umfassten Geräte 12-16, 20-24 anzeigen.

Die Art und der Ursprung solcher Meldungen 28 ist über die exemplarisch erwähnten Beispiele hinaus äußerst vielfältig und jede im Automatisierungssystem 10 erzeugte oder verarbeitete Meldung 28 - speziell jede Meldung 28, die auf eine Abweichung von einem erwarteten Betrieb hindeutet - soll im Folgenden als von der Bezeichnung Meldung 28 umfasst gelten.

Es hat sich allerdings gezeigt, dass bei bestimmten Betriebssituationen eine solche Fülle von Meldungen 28 (Meldungsflut, Alarmschauer) auftritt, dass es einem das Automatisierungssystem 10 und dem technischen Prozess 26 beaufsichtigenden Bediener schwerfällt, die Übersicht zu wahren und bei eventuellen schwerer wiegenden Fehlern geeignete Gegenmaßnahmen einzuleiten.

Bisher ist es häufig so, dass der Bediener sein Erfahrungswissen nutzt, das er durch die Ausbildung und den Umgang mit der Anlage, also Automatisierungssystem 10 und technischen Prozess 26, gesammelt hat, um Fehler und dergleichen, die den Betrieb der Anlage stören, schnell beseitigen zu können. Durch Antizipation wird versucht, Auswirkungen zu unterbinden, was bei komplexen Anlagen zunehmend schwieriger und risikoreicher wird. Teilweise ist aus Erfahrung bekannt, welche Maßnahmen bei bestimmten Meldungesfluten erforderlich sind. Häufig kann auch schon auf bestimmte Wirkungen einer Ursache einer bestimmten Meldung reagiert werden, weil die jeweilige Ursache aus Erfahrung, d. h. aus in der Vergangenheit erhaltenen Meldungen 28, und einer dabei erkannten Ursache bekannt sind.

Ein automatisierter Ansatz zur Einschränkung der Meldungsflut, der nicht ausschließlich auf der Erfahrung der betroffenen Bediener basiert, ist mit dem von der Anmelderin der vorliegenden Erfindung unter der Marke SIMATIC PCS7 vertriebenen Prozessleitsystem bekannt geworden. Dort ist es möglich, bei der Projektierung Anlagen- und Betriebszustände zu definieren, die jeweils ein unterschiedliches Meldeverhalten erfordern oder nach sich ziehen. In bestimmten Anlagenzuständen überflüssige Meldungen können bereits bei der Generierung oder Weiterverarbeitung aufgrund logischer Verknüpfungen unterbunden werden. Außerdem können einzelne Meldungstypen (Alarme) quasi ausgeblendet werden, d. h. sie werden dem Bediener nicht angezeigt, aber weiterhin in einem Meldungsarchiv hinterlegt. Beim Strukturieren aufgelaufener Meldungen 28 ist es wichtig, sich auf wesentliche Meldungen 28 zu konzentrieren. Es besteht auch die Möglichkeit, Filter zu benutzen, die bewirken, dass je nach Bediener bestimmte Meldungstypen ausgeblendet werden. Darüber hinaus kommt zur Strukturierung von Meldungen auch die Vergabe von Prioritäten in Betracht, so dass weniger wichtige oder weniger relevante Meldungen als solche kenntlich gemacht werden können.

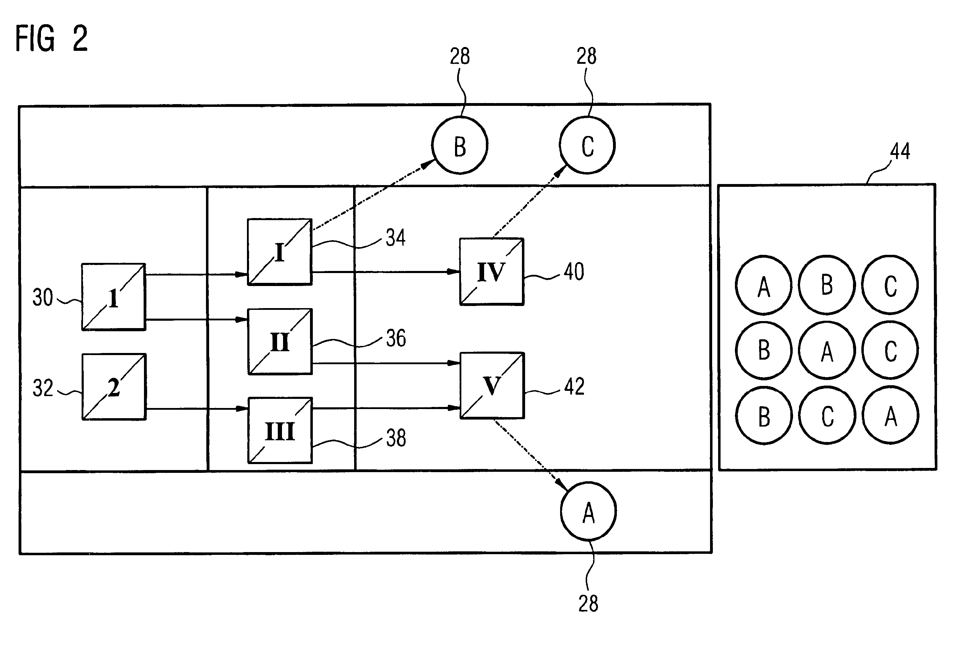

FIG 2 zeigt eine Darstellung zur Illustration der der Erfindung zugrunde liegenden Problematik: Eine erste und zweite Ursache 30, 32 können eine erste, zweite und dritte Wirkung 34, 36, 38 zur Folge haben. Einzelne Wirkungen 34-38 können noch Folgewirkungen 40, 42 nach sich ziehen. Meldungen 28 (vgl. auch FIG 2) werden dabei aufgrund der ersten Wirkung 34, der ersten Folgewirkung 40 und der zweiten Folgewirkung 42 erzeugt. Wie auf der rechten Seite der Darstellung in FIG 2 gezeigt ist, können sich hinsichtlich der Reihenfolge des Eintritts der Meldungen 28 mehrere unterschiedliche Kombinationen 44 ergeben. Zur Unterscheidung einzelner Meldungen 28 in einer Gruppe von Meldungen wird im Folgenden auch auf die dargestellten Symbole, nämlich A, B, C Bezug genommen, die auch als graphische Repräsentation einer charakteristischen Kennzeichnung, die für jede Meldung 28 erfassbar oder ableitbar ist, aufgefasst werden kann. Mit dieser Notation lässt sich feststellen, dass durch die erste Wirkung 34 die Meldung B erzeugt wird. Die erste Wirkung 34 zieht darüber hinaus die erste Folgewirkung 40 nach, welche ihrerseits zu der Meldung C führt. Die zweite Wirkung 36 hat einen anderen Wirkungspfad zur Folge, welche jedoch auch eine Meldung A erzeugt. Dadurch gibt es einen kausalen Zusammenhang zwischen den Meldungen B und C, jedoch nicht zwischen den Meldungen A und B oder A und C, was verschiedene mögliche Kombinationen 44 von Meldungen 28 aus dem in FIG 2 dargestellten Szenario in einem Meldungsarchiv zur Folge hat.

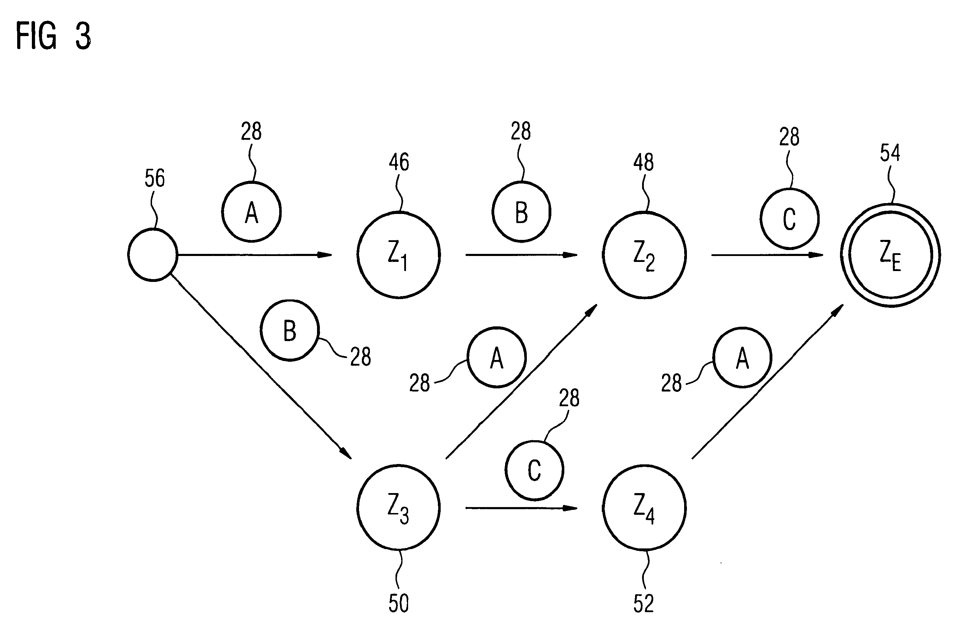

FIG 3 zeigt die Wirkzusammenhänge aus dem Szenario gemäß FIG 2 durch Abbildungsregeln wie sie einem endlichen Automaten zugrunde liegen. Die Einheiten Z₁, Z₂, Z₃, Z₄ und Z_{E} bezeichnen dabei unterschiedliche Zustände des endlichen Automaten, also einen ersten, zweiten, dritten und vierten Zustand 46, 48, 50, 52 und sodann einen Endzustand 54, dem in der Darstellung in FIG 3 ein Anfangszustand 56 gegenüberliegt. Je nach generierter oder aufgetretener Meldung 28 wechselt der endliche Automat in einen bestimmten Zustand, also z. B. beim anfänglichen Auftreten der Meldung A in den ersten Zustand 46 Z_{1.} Je nachdem, ob der Endzustand 54 Z_{E} über die Zustände 46, 48 Z₁, Z₂ oder die Zustände 48, 50 Z₂, Z₃ oder die Zustände 50, 52 Z₃, Z₄ erreicht wird, ergeben sich unterschiedliche Kombinationen 44 (FIG 2) in der Reihenfolge der aufgetretenen Meldungen 28. Durch die Darstellung zugrunde liegender Wirkzusammenhänge in einem endlichen Automaten können daraus ableitbare Erkenntnisse in das Engineering oder Re-Engineering einer Meldungsprojektierung einfließen, um z. B. Meldungssequenzen (A, B, C; B, A, C; B, C, A; usw.) auf eine Meldung zu reduzieren, indem z. B. lediglich zu der insgesamt zugrunde liegenden Ursache eine Meldung erzeugt und angezeigt wird. Dadurch kann der Bediener entlastet werden.

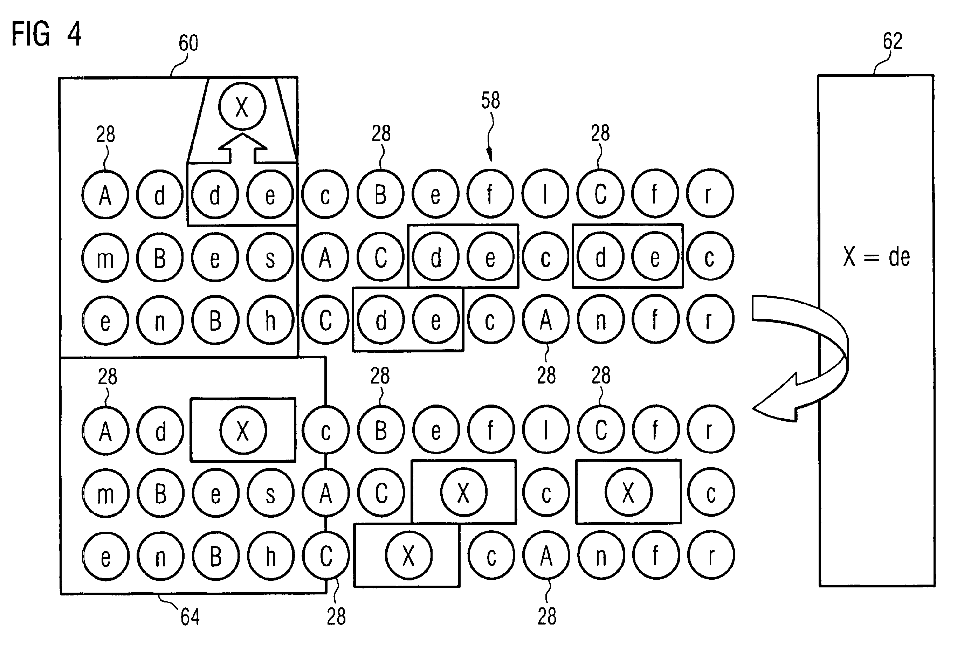

FIG 4 ist zur Veranschaulichung des Ansatzes gemäß der Erfindung am Beispiel einer größeren Menge von Meldungen A, B, C, c, d, e, f, usw., also einem umfangreicheren Meldungsarchiv 58, vorgesehen. Das Meldungsarchiv 58 umfasst auch die Meldungen 28, die zuvor anhand der Darstellungen in FIG 2 und FIG 3 erörtert wurden. In dem Meldungsarchiv 58 kann eine Meldung selbst oder eine für die Meldung 28 charakteristische Kennzeichnung - ein Symbol - erfasst werden, hier dargestellt anhand der Kennzeichnungen (Symbole) A-C, c, d, e, usw. In dem Meldungsarchiv 58 sind die Meldungen 28 darüber hinaus in chronologischer Reihenfolge gespeichert, d. h. die Meldungen 28 sind nach einer deren Auftreten kodierenden Zeitinformation sortiert, so dass sich eine zeitlich sortierte Symbolfolge ergibt. Eine solche Sortierung kann sich im einfachsten Fall auch daraus ergeben, dass das Meldungsarchiv 58 als Stapelspeicher oder dergleichen implementiert ist und die Position einer Meldung 28 im Meldungsarchiv 58 gleichzeitig deren Auftreten kodiert. Die Position tritt dann also unmittelbar an die Stelle einer Zeitinformation und ergibt sich nicht erst als Resultat einer separat erfassten Zeitinformation.

Auf den Inhalt des Meldungsarchivs 58 oder eine zugehörige Symbolfolge wird eine Mustererkennung 60 angewandt. Dieser werden bei der Analyse erstellte, in einem Regelspeicher 62 vorgehaltene Regeln zugrunde gelegt. Die automatische Erstellung bei der Analyse basiert z. B. darauf, dass eine konkrete Symbolfolge zunächst nach aufeinander folgenden Symbolpaaren mit dem höchsten Vorkommen durchsucht wird. Eine sich dann ergebende Regel bezieht sich auf die von dem erkannten Muster umfassten Symbole. Hier besagt die in dem Regelspeicher 62 dargestellte Regel "X=de", dass die in einer Gruppe aufeinander folgenden Meldungen/Symbole "de" - hier paarweise aufeinander folgende Meldungen/Symbole - als eine neue Meldung/ein neues Symbol "X" ausgedrückt werden. Insgesamt ergibt sich damit eine Abkürzung der durch den Inhalt des Meldungsarchivs 58 definierten Symbolfolge (aus der Symbolfolge "Addec" usw. wird aufgrund einer Mustervereinfachung 64 die Symbolfolge "AdXc" usw.).

Die Komplexität der bei der Mustererkennung 60 und Mustervereinfachung 64 zugrunde gelegten Regeln ist grundsätzlich unbegrenzt, so dass mit einer weiteren Regel, z. B. "Y=Xc", eine nochmalige Verkürzung der in FIG 4 im unteren Teil bereits verkürzt dargestellten Symbolfolge erreicht werden kann (nicht erneut dargestellt).

Eine Mustererkennung 60 wie sie in FIG 4 dargestellt ist, kommt z. B. in Betracht, wenn es darum geht, zwischen Meldungen A, B, C, deren Auftreten nach Mustern untersucht werden soll, liegende weitere Meldungen (im Folgenden zur Unterscheidung als Störmeldung bezeichnet) zu eliminieren. Durch die mit der Mustervereinfachung 64 erreichte Abkürzung der Symbolfolge tritt ein Muster im Hinblick auf die Meldungen A, B, C 28 besser zutage. In Bezug auf die reduzierte Symbolfolge kann nun als Mustersuche eine syntaktische Meldungsanalyse erfolgen, mit der wiederkehrende Meldungsmuster erkannt werden.

Für erkannte wiederkehrende Meldungsmuster ist deren Darstellung in einer Trefferliste, insbesondere in einer nach einer Häufigkeit des Auftretens ein und desselben Meldungsmusters sortierten Form, möglich. Die Häufigkeitsverteilung gibt Aufschluss über die Anzahl der Vorkommen wiederkehrender Meldungsmuster und liefert Erkenntnisse über die Häufigkeit von Wirkungsketten. Zusätzlich birgt die Trefferliste Aussagen über mögliche problematische Geräte (FIG 1) und eine statistische Auswirkung der Trefferliste kann derartige Geräte aufdecken. Die daraus und die aus der Trefferliste insgesamt resultierenden Informationen können zur Erhöhung der Wirtschaftlichkeit der Anlage und ebenso zur Verbesserung des Engineerings, nämlich speziell der Meldungsprojektierung, beitragen.

Bei den in dem Regelspeicher 62 vorgehaltenen Regeln handelt es sich um reguläre Abbildungsregeln, mit denen es möglich ist, wiederkehrende Teilsequenzen in der durch den Inhalt des Meldungsarchivs 58 ausgedrückten Symbolfolge zu erkennen, was für den Projektierer, also die Fachkraft, die bei der Projektierung der Anlage (FIG 1) festlegt, welche Ereignisse zu welchen Meldungen 28 führen, von Interesse ist, wenn für eine Verbesserung einer solchen Projektierung nur ein Teilmuster interessant ist. Das Verfahren arbeitet bei der Mustersuche mit rein formalen Methoden, so dass keine Informationen über den Aufbau der Anlage und dem zugrunde liegenden technischen Prozess 26 (Fig 1) vorausgesetzt werden. Zur Interpretation gefundener Muster im Hinblick auf ihre Bedeutung für den Anlagenbetrieb ist jedoch eine genaue Kenntnis der Anlage erforderlich. Durch Filter ist es möglich, aus der Gesamtheit aller Meldungen 28 eine Teilmenge herauszugreifen oder auszuschließen, die bestimmten Kriterien genügt, um diese oder den verbleibenden Rest zu analysieren. Beispielsweise werden Meldungen 28 als "kommend" bezeichnet, wenn das Ereignis auftritt, welches die Meldung 28 auslöst und als "gehend" bezeichnet, wenn die Ursache für die Meldung 28 nicht mehr besteht. Beispielsweise können demnach nur kommende Meldungen 28 analysiert werden, um verfolgen zu können, welche Ursachen welche "kommenden" Meldungen 28 als Folgewirkung haben. Des Weiteren ist ein solcher Filter hilfreich, um so genannte Flatteralarme auszublenden. Flatteralarme machen sich dadurch bemerkbar, dass bestimmte Meldungen 28 mit der gleichen Kennzeichnung, also z. B. der gleichen Meldungsnummer, in rascher Folge immer wieder "kommen" und "gehen". Das Differenzieren von Meldungsfolgen, die an unterschiedlichen Stellen im Automatisierungssystem 10 (FIG 1), also z. B. einem durch das Automatisierungssystem 10 verwirklichten Prozessleitsystem auftreten, ist hinsichtlich einer Rückverfolgbarkeit von Ursache und Wirkungen hilfreich. Durch solche Unterscheidungen ist es möglich, aus der sich anhand des Inhalts des Meldungsarchivs 58 ergebenden Symbolfolge nur solche Symbole (und damit die jeweils zugrunde liegenden Meldungen 28) zu betrachten, die sich auf bestimmte Geräte 12-16, 20-24 oder Anlagenteile beziehen. Ein damit einhergehender Vorteil macht sich umso stärker bemerkbar, je umfangreicher die Anlage ist.

Zusammenfassend lässt sich die Erfindung damit kurz wie folgt beschreiben: Es wird ein Verfahren zum Analysieren einer Menge von Meldungen 28 angegeben, bei denen die Meldungsmenge auf der Basis einer Mustererkennung 60 und Mustervereinfachung 64 reduziert wird, wobei für eine solche Mustererkennung 60 und Mustervereinfachung 64 Regeln einer regulären Grammatik zugrunde gelegt werden und wobei in den verbleibenden Meldungen 28 oder auch unmittelbar, also ohne vorherige Vereinfachung, nach Mustern gesucht wird, wobei für jede Art von Mustersuche eine syntaktische Mustererkennung 60 in Betracht kommt und anhand der der Mustererkennung 60 jeweils zugrunde liegenden regulären Grammatik durch Transformation der Abbildungsregeln in Überführungsfunktionen ein endlicher Automat (FIG 3) abgeleitet werden kann, mit dem sich strukturelle Zusammenhänge zwischen den Meldungen 28 graphisch darstellen lassen.

## Patentansprüche

1. Verfahren zum Analysieren einer Menge von bei der Steuerung und/oder Überwachung eines technischen Prozesses (26) generierten Meldungen (28), zu denen jeweils eine deren Auftreten kodierende Zeitinformation und eine charakteristische Kennzeichnung (A-C, c-f, 1-n, r, s) erfasst werden zur Ableitung eines endlichen Automaten,
wobei in einer nach der Zeitinformation sortierten Abfolge von Kennzeichnungen (A-C, c-f, 1-n, r, s) nach Mustern (de) gesucht wird und
wobei erkannte Muster (de) durch eine das Muster charakterisierende Kennzeichnung (X) ersetzt werden,
**dadurch gekennzeichnet,**
**dass**
als Muster (de) eine Gruppe aufeinander folgender Kennzeichnungen, insbesondere paarweise aufeinander folgende Kennzeichnungen, gesucht wird,
**dass** erkannte Muster (de) durch eine oder mehrere Regeln (X=de) der regulären Grammatik abgekürzt werden und
**dass** aus der zur Abkürzung verwendeten regulären Grammatik ein korrespondierender endlicher Automat abgeleitet wird.

2. Verfahren nach Anspruch 1, wobei die Suche nach Mustern (de) unter Verwendung von Verfahren der syntaktischen Mustererkennung (60) erfolgt.

3. Verfahren nach Anspruch 1 oder 2, wobei in der nach der Zeitinformation sortierten Abfolge von Kennzeichnungen (A-C, c-f, 1-n, r, s) solche Kennzeichnungen ausgeblendet werden, die zu Meldungen (28) gehören, die vorgegebenen oder vorgebbaren Kriterien entsprechen.

4. Verfahren nach Anspruch 3, wobei sich das Kriterium oder die Kriterien auf eine Zugehörigkeit einer Meldung (28) zu einem Anlagenteil des technischen Prozesses (26) und/oder eines zu dessen Steuerung und/oder Überwachung vorgesehenen Automatisierungssystems (10) bezieht oder beziehen.

5. Verfahren nach einem der vorangehenden Ansprüche, wobei das Automatisierungsgerät (12-16) die Meldungen (28) selbst generiert und/oder aus dem technischen Prozess (26) oder von anderen in die Steuerung oder Überwachung des Prozesses (26) involvierten Automatisierungsgeräten (12-16) erhält.

6. Verfahren nach einem der vorangehenden Ansprüche, wobei erkannte Muster (de), die mit einer einen vorgegebenen oder vorgebbaren Schwellwert überschreitenden Häufigkeit auftreten, in einer Trefferliste dargestellt werden.

7. Verfahren nach einem der vorangehenden Ansprüche, wobei ein Meldungsfenster anhand eines einen vorgegebenen oder vorgebbaren Schwellwert überschreitenden zeitlichen Abstands zwischen aufeinander folgenden Mustern gebildet wird.

8. Computerprogramm mit durch einen Computer ausführbaren Programmcodeanweisungen zur Implementierung des Verfahrens nach einem der Ansprüche 1 bis 7, wenn das Computerprogramm auf einem Computer ausgeführt wird.

9. Speichermedium mit einem durch einen Computer ausführbaren Computerprogramm gemäß Anspruch 8.

10. Computersystem auf dem ein Computerprogramm nach Anspruch 8 geladen ist.

## Claims

1. Method for analyzing a set of messages (28) which are generated while controlling and/or monitoring a technical process (26) and for each of which an item of time information which codes the occurrence of said messages and a characteristic identification (A-C, c-f, 1-n, r, s) are recorded in order to derive a finite automaton,
a search being carried out for patterns (de) in a sequence of identifications (A-C, c-f, 1-n, r, s) which has been sorted according to the time information, and recognized patterns (de) being replaced with an identification (X) which characterizes the pattern,
**characterized in that** a search is carried out for, as a pattern (de), a group of successive identifications, in particular pairs of successive identifications, **in that** recognized patterns (de) are shortened by means of one or more regular grammar rules (X=de) and **in that** a corresponding finite automaton is derived from the regular grammar used for the shortening operation.

2. Method according to Claim 1, the search for patterns (de) being carried out using syntactic pattern recognition (60) methods.

3. Method according to Claim 1 or 2, those identifications which belong to messages (28) which satisfy predefined or predefinable criteria being hidden in the sequence of identifications (A-C, c-f, l-n, r, s) which has been sorted according to the time information.

4. Method according to Claim 3, the criterion or criteria relating to affiliation of a message (28) to a system part of the technical process (26) and/or of an automation system (10) intended to control and/or monitor the process.

5. Method according to one of the preceding claims, the automation device (12-16) itself generating the messages (28) and/or receiving them from the technical process (26) or from other automation devices (12-16) involved in controlling or monitoring the process (26).

6. Method according to one of the preceding claims, recognized patterns (de) which occur at a frequency which exceeds a predefined or predefinable threshold value being represented in a hit-list.

7. Method according to one of the preceding claims, a message window being formed using an interval of time between successive patterns, which interval of time exceeds a predefined or predefinable threshold value.

8. Computer program having program code instructions which can be executed by a computer and are intended to implement the method according to one of Claims 1 to 7 when the computer program is executed on a computer.

9. Storage medium having a computer program which can be executed by a computer according to Claim 8.

10. Computer system on which a computer program according to Claim 8 has been loaded.

## Revendications

1. Procédé d'analyse d'un nombre de messages ( 28 ), qui sont produits dans la commande et/ou dans le contrôle d'une opération ( 26 ) technique et pour lesquels sont détectées respectivement une information de temps codant leur apparition et une caractérisation ( A à C, c à f, 1 à n, r, s ) caractéristique pour déduire un automate à états finis,
dans lequel on recherche des motifs ( de ) dans une suite, triée suivant l'information de temps, de caractérisation ( A à C, c à f, 1 à n, r, s ) et
dans lequel on remplace des motifs ( de ) reconnus par une caractérisations ( X ) caractérisant le motif,
**caractérisé**
**en ce que**
on recherche comme motif ( de ) un groupe de caractérisations se succédant, notamment de caractérisations se succédant par paire,
**en ce qu'**on raccourcit des motifs ( de ) reconnus par une ou par plusieurs règles ( X = de ) de la grammaire régulière et
**en ce qu'**on déduit un automate à états finis correspondant à partir de la grammaire régulière utilisée pour le raccourcissement.

2. Procédé suivant la revendication 1, dans lequel on effectue la recherche de motif (de) en utilisant des procédés de la reconnaissance ( 60 ) de motif syntactique.

3. Procédé suivant la revendication 1 ou 2, dans lequel on supprime, dans la suite triée suivant l'information de temps, de caractérisations ( A à C, c à f, 1 à n, r, s ), les caractéristiques qui appartiennent à des messages ( 28 ) qui correspondent à des critères prescrits ou pouvant l'être.

4. Procédé suivant la revendication 3, dans lequel le critère ou les critères se rapporte ou se rapportent à une appartenance d'un message ( 28 ) à une partie d'installation de l'opération ( 26 ) technique et/ou d'un système ( 10 ) d'automatisation prévu pour sa commande et/ou son contrôle.

5. Procédé suivant l'une des revendications précédentes, dans lequel l'appareil ( 12 à 16 ) d'automatisation produit soi-même les messages ( 28 ) et/ou les reçoit de l'opération ( 26 ) technique ou d'autres appareils ( 12 à 16 ) d'automatisation impliqués dans la commande ou dans le contrôle de l'opération ( 26 ).

6. Procédé suivant l'une des revendications précédentes, dans lequel des motifs ( de ) reconnus, qui se produisent à une fréquence dépassant une valeur de seuil prescrite ou pouvant l'être, sont représentés dans une liste de contrôle.

7. Procédé suivant l'une des revendications précédentes, dans lequel on forme une fenêtre de messages au moyen d'un intervalle de temps entre des motifs successifs dépassant une valeur de seuil prescrite ou pouvant l'être.

8. Programme d'ordinateur ayant des instructions de code de programme, qui peuvent être réalisées par un ordinateur et qui sont destinées à la mise en oeuvre du procédé suivant l'une des revendications 1 à 7, lorsque le programme d'ordinateur est exécuté sur un ordinateur.

9. Support de mémoire ayant un programme d'ordinateur pouvant être réalisé par un ordinateur suivant la revendication 8.

10. Système d'ordinateur, sur lequel un programme d'ordinateur suivant la revendication 8 est chargé.
